# EUROPÄISCHE PATENTSCHRIFT

(11) **EP 0 319 108 B1**
(45) Veröffentlichungstag und Bekanntmachung des Hinweises auf die Patenterteilung: **26.01.1994**
(21) Anmeldenummer: 88202741.0
(22) Anmeldetag: 30.11.1988
(51) Int. Cl.: H04M 1/02, H04M 1/66

(54) **Sprechhörer, insbesondere für eine Mobilfunkanlage**
Hand set, particularly for a radiotelephone
Combiné, en particulier pour un radiotéléphone

(30) Priorität: 03.12.1987 DE 3740896
(43) Veröffentlichungstag der Anmeldung: 07.06.1989
(73) Patentinhaber: Philips Patentverwaltung GmbH, 22335 Hamburg (DE); Philips Electronics N.V., 5621 BA Eindhoven (NL)
(72) Erfinder: Walters, Eckhard, Dipl.-Ing., D-8505 Röthenbach/Pegnitz (DE)
(74) Vertreter: Peuckert, Hermann, Dipl.-Ing.

(56) Entgegenhaltungen:
- DE-A- 3 610 202
- DE-U- 8 631 855
- DE-U- 8 703 483
- DE-U- 8 703 864

## Beschreibung

Die Erfindung betrifft einen Sprechhörer, insbesondere für eine Mobilfunkanlage, mit Bedienungs- und Anzeigemitteln, mit einer Hörmuschel und einer Sprechmuschel und mit einem Einführungsschlitz für eine Informationen tragende Karte und mit einer Kartenlesevorrichtung, wobei der die Hörmuschel aufweisende Teil und der die Sprechmuschel aufweisende Teil des Sprechhörers gegeneinander unter einem stumpfen Winkel geneigt sind und zwischen sich einen Scheitelbereich einschließen.

Es ist bei Mobilfunkanlagen, insbesondere Autotelefonanlagen, bereits bekannt, den Sprechhörer als Bedienhörer auszubilden, indem ein Tastenfeld für die Wähleinrichtung als Bedienungsmittel sowie Anzeigemittel im Sprechhörer selbst untergebracht sind. Hierdurch werden ein gesondertes Bediengerät sowie die hierfür erforderliche Verkabelung im Kraftfahrzeug eingespart. Der Sprechhörer ist im Kraftfahrzeuginnenraum auf einer Hörerauflage gehalten, die einerseits für einen mechanisch festen Sitz des Bedienhörers sorgt und andererseits bei Anlagen, welche erst mit einer Berechtigungskarte in Betrieb gesetzt werden können, die Kartenlesevorrichtung aufnimmt. Eine solche Berechtigungskarte trägt Informationen wie z.B. die Rufnummer. Dabei hat sich eine bestimmte Normgröße herausgebildet, die entsprechende Abmessungen der Kartenlesevorrichtung erfordert. Kartenlesevorrichtungen werden als in sich abgeschlossene komplette Baueinheiten von einschlägigen Herstellern geliefert.

Ein Sprechhörer dieser Art ist beispielsweise in der deutschen Auslegeschrift 30 15 050 beschrieben. Der hieraus bekannte Sprechhörer ist so ausgebildet, daß die Sprechhörerauflage von allen elektrischen Funktionen befreit ist und lediglich die Aufgabe hat, den Sprechhörer zu haltern. Hiermit bereits ist die Lehre gegeben, auch die Kartenlesevorrichtung im Sprechhörer unterzubringen.

Die Art der Unterbringung bereitet jedoch Schwierigkeiten, da der Innenraum des Sprechhörers wegen der Vielzahl der zu erfüllenden Funktionen bereits weitgehend mit Bauteilen für elektronische Schaltkreise, Schaltmittel, Sprech- und Hörkapsel und dgl. ausgefüllt ist. Eine Vergrößerung der Abmessungen des Sprechhörers ist aber unbedingt zu vermeiden, um ihn nicht unhandlich und benutzerunfreundlich werden zu lassen.

In DE 36 10 202 A1 ist ein Sprechhörer, insbesondere für ein Autotelefon, angegeben, der eine Kartenlesevorrichtung enthält. Zum Einführen der Karte ist am Gehäuse des Sprechhörers an einer der beiden Stirnseiten oberhalb entweder der Sprech- oder der Hörmuschel ein Einführungsschlitz vorgesehen, an den sich ein Aufnahmeraum für die Karte und die Kartenleseeinrichtung anschließen. Als eine weitere in dieser Schrift angegebene Ausführungsform ist vorgeschlagen, daß das Sprechhörergehäuse einen den Aufnahmeraum für die Karte begrenzenden aufklappbaren oberen Wandteil hat. Die Karte kann nach Aufklappen des Wandteils in den darunter befindlichen Raum eingelegt werden, wobei der Aufnahmeraum durch zwei zur Hörerlängsrichtung parallele Führungsleisten begrenzt ist, deren Abstand der Kartenbreite angepaßt ist.

Der Erfindung liegt die Aufgabe zugrunde, einen Sprechhörer der eingangs genannten Art anzugeben, welcher neben einem Tastenfeld für eine Wähleinrichtung und Anzeigemitteln eine Kartenlesevorrichtung enthält und dennoch eine gefällige und insbesondere im Bereich der Sprechmuschel schmale Formgebung gestattet.

Diese Aufgabe wird ausgehend von einem Sprechhörer der eingangs genannten Art gemäß der Erfindung dadurch gelöst, daß im Scheitelbereich quer zur Längserstreckung des Sprechhörers der Einführungsschlitz für die Karte und daran angrenzend eine Kartenlesevorrichtung vorgesehen sind, wobei der Einführungsschlitz an der Seite des Scheitelbereichs mündet, an der der die Sprechmuschel enthaltende Teil des Sprechhörers angrenzt. Dies hat den Vorteil, daß die Karte auch eingeschoben werden kann, wenn der Sprechhörer auf beengtem Raum untergebracht ist und weder von den Längsseiten noch von den Stirnseiten zugänglich ist. Die Kartenlesevorrichtung ist in dem die Hörmuschel aufweisenden Teil des Sprechhörers angeordnet, wobei sich in diesem Teil an der Oberseite des Sprechhörers Anzeigemittel sowie ein Tastenfeld für eine Wähleinrichtung befinden. Dies bietet den Vorteil, daß die Mindestbreite des die Sprechmuschel aufweisenden Teils nicht durch die Breite des Tastenfeldes bestimmt ist, sondern schmaler ausgeführt werden kann.

Weitere vorteilhafte Ausgestaltungen sind in den abhängigen Ansprüchen angegeben.

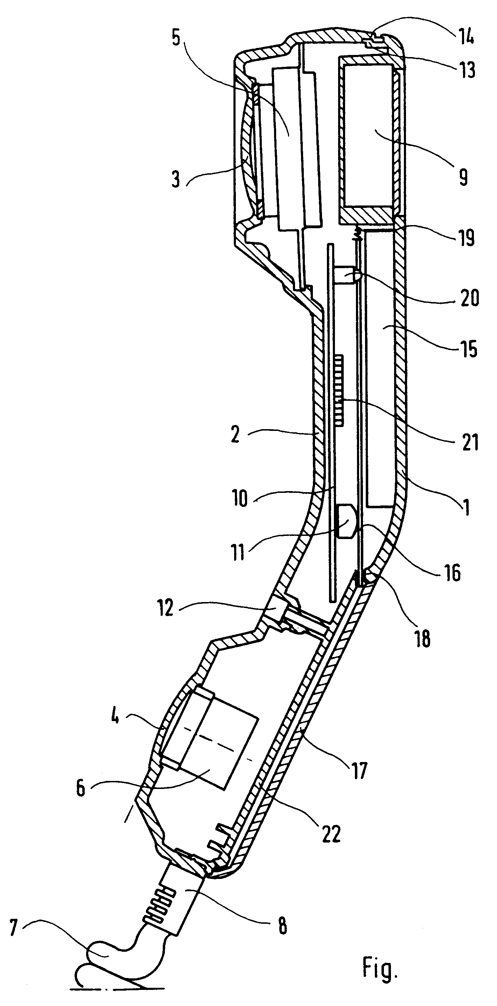

Im folgenden wird anhand eines in der Figur dargestellten Ausführungsbeispiels die Erfindung näher beschrieben und erläutert.

Die Figur zeigt in schematischer Darstellung einen Bedienhörer im Schnitt. Das Gehäuse des Sprechhörers besteht aus einem schalenförmigen Oberteil 1 und einem mit diesem mechanisch fest verbundenen ebenfalls schalenförmig ausgebildeten Unterteil 2. Oberteil 1 und Unterteil 2 sind an den Stirnseiten mittels Rastnasen 13 und Rastaufnahmen 14 miteinander verrastet und im mittleren Bereich mittels einer Schraube 12 miteinander verschraubt. Im einem Endbereich ist im Unterteil eine Hörmuschel 3 ausgeformt, hinter welcher sich die Lautsprecherkapsel 5 befindet. Am entgegengesetzten Ende des Unterteils 2 ist eine Sprechmuschel 4 vorgesehen, in der die Mikrophonkapsel 6 in bekannter Weise gehalten ist. An diesem sprechmuschelseitigen Ende ist auch das Anschlußkabel 7 eingeführt. Es ist an der Einführstelle mit einer Kabelschutztülle 8 versehen. Am anderen Ende ist das Kabel 7 mit einem Stecker versehbar, mit dem es ohne Zwischenschaltung von elektrische Funktionen ausführenden Sprechhörerhalterungen z.B. auch unmittelbar am Funkteil der Mobilfunkanlage anschließbar ist.

Die beiden die Sprechmuschel 4 und die Hörmuschel 5 aufweisenden Bereiche des Sprechhörers sind gegeneinander unter einem stumpfen Winkel geneigt, so daß zwischen ihnen ein Scheitelbereich eingeschlossen ist und die Sprechmuschel 4 und die Hörmuschel 5 etwa parallel zu den ihnen abgewandten Oberseiten des Sprechhörers angeordnet sind. Hierdurch wird erreicht, daß im gesamten Bereich zwischen Sprech- und Hörmuschel der Sprechhörer nicht dicker sein muß als im Scheitelbereich. Somit ist eine handhabungsfreundliche Form gewährleistet.

Im Oberteil 1 des Sprechhörers befinden sich oberhalb der Hörmuschel 5 Anzeigemittel 9 mit zugehörigen Ansteuermitteln. In den angrenzenden zum Scheitelbereich sich hin erstreckenden Bereich der Oberseite sind das Tastenfeld 15 für die Wähleinrichtung sowie weitere Funktionstasten angeordnet. Diese Anordnung hat den Vorteil, daß der Sprechhörer bequem an dem die Sprechmuschel aufweisenden Teil gehalten werden kann, wenn das Tastenfeld für die Wähleinrichtung unter Beobachtung der Anzeigemittel zu bedienen ist. Im Bereich der Hörmuschel ist die Breite des Sprechhörers im wesentlichen durch die Abmessungen des Tastenfeldes 15 für die Wähleinrichtung bestimmt. Die Größe der Tasten darf eine gewisse Mindestgröße nicht unterschreiten, damit Fehlbedingungen möglichst vermieden werden. Unterhalb des Tastenfeldes 15 für die Wähleinrichtung ist eine Leiterplatte 10 eingebaut, welche elektronische Schaltkreise trägt. In dem Raum zwischen dem Tastenfeld 15 und der Leiterplatte 10 ist eine Kartenlesevorrichtung gebildet. Zur Führung der Karte 16 im Gehäuse des Sprechhörers sind im Oberteil 1 in der Figur nicht näher dargestellte seitliche Führungsmittel angeformt. Im Ausführungsbeispiel ist eine Magnetkarte als Informationen tragenden Karte vorgesehen. Der hierfür erforderliche Lesekopf 11 ist unmittelbar auf der Leiterplatte 10 neben den weiteren, die elektronischen Schaltkreise bildenden Bauteilen 21 untergebracht. Durch einen Einführungsschlitz 18 im Scheitelbereich ist die Karte 16 einführbar, ihr Einschubweg ist durch die Feder 19 begrenzt. In der Endlage betätigt die Karte einen Endlagenschalter 20, welcher ebenfalls mechanisch auf der Leiterplatte 10 befestigt und elektrisch mit auf der Leiterplatte 10 angeordneten elektronischen Schaltkreisen verbunden ist. Der Endlagenschalter besitzt eine Schaltnocke, welche in der Endlage der Karte durch eine in dieser vorhandene Ausnehmung freigegeben wird. Hierdurch ist prüfbar, ob die Karte vollständig eingeschoben wurde. Die Feder 19 kann auch Bestandteil einer Reversiermechanik sein, durch welche die Karte bei erneutem Druck auf ihren im Einführungsschlitz befindlichen Rand wieder selbsttätig herausgeschoben wird.

Die Anformung von Führungsmitteln unmittelbar an Innenwänden von Gehäuseteilen des Sprechhörers hat den besonderen Vorteil, daß keine gesonderte Kartenlesevorrichtung als selbständiges Bauteil im Sprechhörer befestigt werden muß, so daß eine besonders platzsparende Bauweise ermöglicht wird, die eine schlanke Gestaltung des Sprechhörers gestattet. Hierzu trägt entscheidend bei, daß die Lese-und Auswertemittel gemäß einer vorteilhaften Ausgestaltung auf einer im Sprechhörer ohnehin erforderlichen Leiterplatte untergebracht sind.

In einer anderen vorteilhaften Ausführungsform ist die Informationen tragende Karte als Chipkarte ausgebildet und weist Kontaktmittel auf, welche mit entsprechenden Gegenkontaktmitteln in der Kartenlesevorrichtung in Verbindung zu bringen sind. Diese Gegenkontaktmittel können in einem Kontaktsatz zusammengefaßt sein, der anstelle des Lesekopfes an geeigneter Position auf der Leiterplatte 10 angebracht ist. Er ist elektrisch ebenfalls mit elektronischen Schaltkreisen auf der gleichen Leiterplatte verbunden.

Der Einführungsschlitz mündet im Scheitelbereich an der Seite, an der der die Sprechmuschel enthaltende Teil des Sprechhörers angrenzt. Auf dieser Seite ist in der vorliegenden Ausführungsform eine Abdeckkappe 17 vorgesehen, die in Längsrichtung verschieblich ist und mit der der Einführungsschlitz 18 abdeckbar ist. Dies hat den Vorteil, daß von außen nicht sichtbar ist, ob die Karte eingesteckt und die Mobilfunkanlage demzufolge betriebsbereit ist. Außerdem ist der Einführschlitz durch die Abdeckkappe wirksam vor Verschmutzung geschützt. Unter der Abdeckkarte 17 ist beim Ausführungsbeispiel ein weiteres in Einzelheiten nicht dargestelltes Tastenfeld 22 untergebracht, sowie zwischen diesem und der Sprechmuschel eine weitere in der Figur nicht näher dargestellte Leiterplatte, welche elektronische Schaltkreise trägt, die zusammen mit dem Tastenfeld 22 die Verwirklichung einer Zielwahleinrichtung ermöglichen.

In einer anderen Ausgestaltung ist die Abdeckkappe mittels eines Scharniers klappbar am Sprechhörer gehalten. Sie kann sowohl an der Längsseite wie auch an der Schmalseite angelenkt sein.

## Patentansprüche

1. Sprechhörer, insbesondere für eine Mobilfunkanlage, mit Bedienungs- und Anzeigemitteln, mit einer Hörmuschel und einer Sprechmuschel und mit einem Einführungsschlitz für eine Information tragende Karte und mit einer daran angrenzenden Kartenlesevorrichtung, wobei der die Hörmuschel aufweisende Teil und der die Sprechmuschel aufweisende Teil des Sprechhörers gegeneinander unter einen stumpfen Winkel geneigt sind und zwischen sich einen Scheitelbereich einschließen,
dadurch gekennzeichnet, daß im Scheitelbereich quer zur Längserstreckung des Sprechhörers der Einführungsschlitz für die Karte und daran angrenzend die Kartenlesevorrichtung vorgesehen sind, wobei der Einführungsschlitz an der Seite des Scheitelbereichs mündet, an der der die Sprechmuschel enthaltende Teil des Sprechhörers angrenzt.

2. Sprechhörer nach Anspruch 1,
dadurch gekennzeichnet, daß an den Innenseiten des Sprechhörers in dem an den Einführungsschlitz angrenzenden Teil Führungsmittel zur Führung der Informationen tragenden Karte (16) angeformt sind.

3. Sprechhörer nach Anspruch 2,
dadurch gekennzeichnet,
daß die Informationen tragende Karte (16) eine Magnetkarte ist und der Lesekopf (11) sowie dazugehörige elektronische Schaltkreise gemeinsam mit weiteren elektronischen Schaltkreisen für im Sprechhörer integrierte Funktionen auf einer im Gehäuse des Sprechhörers gehaltenen Leiterplatte (10) untergebracht sind.

4. Sprechhörer nach Anspruch 1,
dadurch gekennzeichnet,
daß die Informationen tragende Karte (16) eine Chipkarte ist und Kontaktmittel aufweist und daß die zugehörigen Gegenkontaktmittel sowie zugehörige elektronische Schaltkreise gemeinsam mit weiteren elektronischen Schaltkreisen für im Sprechhörer integrierte Funktionen auf einer im Gehäuse des Sprechhörers gehaltenen Leiterplatte (10) untergebracht sind.

5. Sprechhörer nach einem der Ansprüche 1 bis 4,
dadurch gekennzeichnet,
daß in dem an den Scheitelbereich angrenzenden die Sprechmuschel (4) aufweisenden Teil an der Oberseite eine Abdeckkappe (17) vorgesehen ist und daß diese Abdeckkappe (17) im geschlossenen Zustand sich über den Einführungsschlitz (18) erstreckt.

6. Sprechhörer nach Anspruch 5,
dadurch gekennzeichnet,
daß in dem an den Scheitelbereich angrenzenden Teil des Sprechhörers an der Oberseite ein Tastenfeld (22) vorgesehen ist, welches mit der Abdeckkappe (17) abdeckbar ist.

7. Sprechhörer nach einem der Ansprüche 5 oder 6,
dadurch gekennzeichnet,
daß die Abdeckkappe (17) in Längsrichtung verschieblich ist.

8. Sprechhörer nach einem der Ansprüche 5 oder 6,
dadurch gekennzeichnet,
daß die Abdeckkappe (17) klappbar ausgeführt ist.

## Claims

1. A handset, in particular for a mobile radio installation, comprising operating and indicating means, with an earpiece and a mouthpiece and an insertion slot for a card carrying information, and with a card-reading device adjacent thereto, while the portion comprising the earpiece and the portion comprising the mouthpiece of the handset are inclined towards each other at an obtuse angle and enclose between them a crown portion,
characterized in that the insertion slot and adjacent thereto the card-reading device are provided in the crown portion transverse to the longitudinal sides of the handset, the insertion slot issuing at that side of the crown portion which adjoins the part of the handset comprising the mouthpiece.

2. A handset as claimed in Claim 1, characterized in that guide means for guiding the card (16) carrying information are formed on the inner sides of the handset in the part adjoining the insertion slot.

3. A handset as claimed in Claim 2, characterized in that the card (16) carrying information is a magnetic card and the read head (11) and associated electronic circuits together with further electronic circuits for functions integrated in the handset are arranged on a circuit board (10) held in the housing of the handset.

4. A handset as claimed in Claim 1, characterized in that the card (16) carrying information is a chip card and has contact means, and in that the associated countercontact means as well as associated electronic circuits together with further electronic circuits for functions integrated in the handset are arranged on a circuit board (10) held in the housing of the handset.

5. A handset as claimed in any one of Claims 1 to 4, characterized in that a cover (17) is arranged in the part adjoining the crown portion and comprising the mouthpiece (4) on the upper side and in that this cover (17) extends over the insertion slot (18) in the closed state.

6. A handset as claimed in Claim 5, characterized in that a keyboard (22) is arranged in the part of the handset adjoining the crown portion on the upper side, which keyboard can be covered by the cover (17).

7. A handset as claimed in any one of Claims 5 or 6, characterized in that the cover (17) is displaceable in longitudinal direction.

8. A handset as claimed in any one of Claims 5 or 6, characterized in that the cover (17) is constructed so as to be pivotable.

## Revendications

1. Combiné, en particulier pour un radiotéléphone, comprenant des moyens de commande et d'affichage, un écouteur et un microphone, une fente d'introduction pour une carte portant des informations et un dispositif de lecture de cartes, la partie présentant l'écouteur et la partie présentant le microphone du combiné étant inclinées l'une par rapport à l'autre en angle obtus et définissant entre elles une zone apicale, caractérisé en ce que la fente d'introduction pour la carte et le dispositif de lecture de cartes adjacent sont prévus dans la zone apicale, perpendiculairement à la direction longitudinale du combiné, la fente d'introduction débouchant sur le côté de la zone apicale adjacente à la partie du combiné qui contient le microphone.

2. Combiné suivant la revendication 1, caractérisé en ce que des moyens de guidage pour guider la carte portant des informations (16) sont formés sur les faces intérieures du combiné dans la partie voisine de la fente d'introduction.

3. Combiné suivant la revendication 2, caractérisé en ce que la carte qui porte les informations (16) est une carte magnétique et la tête de lecture (11) ainsi que les circuits de commutation électroniques associés sont placés sur une plaquette à circuit imprimé (10) logée dans le boîtier du combiné conjointement avec d'autres circuits de commutation électroniques pour des fonctions intégrées dans le combiné.

4. Combiné suivant la revendication 1, caractérisé en ce que la carte qui porte les informations (16) est une carte à puce et présente des moyens de contact et que les moyens de contact de contrepartie correspondants ainsi que les circuits de commutation électroniques correspondants sont placés sur une plaquette à circuit imprimé (10) logée dans le boîtier du combiné en même temps que d'autres circuits de commutation électroniques pour des fonctions intégrées dans le combiné.

5. Combiné suivant l'une des revendications 1 à 4, caractérisé en ce qu'un capot (17) est prévu sur la face supérieure dans la partie présentant le microphone (4) adjacente à la zone apicale et qu'en position de fermeture, ce capot (17) recouvre la fente d'introduction (18).

6. Combiné suivant la revendication 5, caractérisé en ce qu'un clavier (22) qui peut être recouvert par le capot (17) est prévu sur la face supérieure dans la partie du combiné adjacente à la zone apicale.

7. Combiné suivant l'une des revendications 5 ou 6, caractérisé en ce que le capot (17) est mobile en sens longitudinal.

8. Combiné suivant l'une des revendications 5 ou 6, caractérisé en ce que que le capot (17) est monté à pivotement.
